# EUROPEAN PATENT SPECIFICATION

(11) **EP 4 376 257 B1**
(45) Date of publication and mention of the grant of the patent: **21.05.2025**
(21) Application number: 23211479.3
(22) Date of filing: 22.11.2023
(51) Int. Cl.: H02J 7/34

(54) **ULTRACAPACITOR MODULE WITH DEAD BAND VOLTAGE CONTROL SYSTEM**
ULTRAKONDENSATORMODUL MIT TOTBANDSPANNUNGSSTEUERUNGSSYSTEM
MODULE ULTRACONDENSATEUR AVEC SYSTÈME DE COMMANDE DE TENSION DE BANDE MORTE

(30) Priority: 22.11.2022 US 202263427179 P; 27.04.2023 US 202363462332 P; 21.11.2023 US 202318515740
(43) Date of publication of application: 29.05.2024
(73) Proprietor: Aptiv Technologies AG, 8200 Schaffhausen (CH)
(72) Inventor: DEUTSCH, Robert, Shelby Township, MI 48315 (US)
(74) Representative: Bardehle Pagenberg Partnerschaft mbB Patentanwälte Rechtsanwälte

(56) References cited:
- US-A1- 2009 309 416
- US-A1- 2010 133 025
- US-A1- 2015 283 911

## Description

This disclosure is directed to an ultracapacitor module with dead band bus voltage control system.

Typically, an ultracapacitor module connected to a voltage supply bus has no ability to control the current sourced from or provided to the ultracapacitor. An example of this may be found in an ultracapacitor module in a voltage stabilization system that increases the voltage of the voltage supply bus of a vehicle while the starter system of an internal combustion engine is engaged and includes a parallel DC/DC converter to recharge the capacitors in the ultracapacitor module. Another example is a backup power supply module which increases the voltage of the voltage supply bus of a vehicle when the bus voltage sags. This module also includes a parallel DC/DC converter to recharge the capacitors in the ultracapacitor module. These examples have no need for adaptive voltage control because they have no method of controlling a response of the ultracapacitor module to voltage transients on the voltage supply bus. In these examples, the capacitor voltage and the working range of the voltage supply bus are the same. There is no control of the bus voltage other than the natural control provided by the capacitor(s).

The documents US 2010/133025 A1, US 2009/309416 A1 and US 2015/283911 A1 refer to known ultracapacitor arrangements. The invention is directed to an ultracapacitor module according to claim 1, and a corresponding method of operating an ultracapacitor module according to claim 10. Preferred embodiments are defined in the dependent claims.

In some examples, the techniques described herein relate to a computer readable medium containing program instructions for operating an ultracapacitor module connected to a voltage bus of a vehicle, the ultracapacitor module having an ultracapacitor cell stack containing one or more ultracapacitor cells, a bidirectional boost/buck DC/DC converter, wherein the ultracapacitor cell stack and the DC/DC converter are connected in series with the voltage bus, one or more voltage sensors configured to determine an operating voltage Vo of the voltage bus, and an electronic controller in electrical communication with the DC/DC converter and the one or more voltage sensors, wherein execution of the program instructions by one or more processors of a computer system causes the electronic controller to carry out: controlling the DC/DC converter using a first set of control parameters when an operating voltage Vo is greater than a target bus voltage value Vt; and controlling the DC/DC converter using a second set of control parameters different from the first set of control parameters when the operating voltage Vo is less than the target bus voltage value Vt.

The ultracapacitor module will now be described, by way of example with reference to the accompanying drawings, in which:
FIG. 1 is an isometric view of an ultracapacitor module according to some embodiments.
FIG. 2 is a schematic diagram of system components of an ultracapacitor module according to some embodiments.
FIG. 3 shows a diagram of voltage fluctuations on the voltage bus and a dead band voltage range for responding to these voltage fluctuations according to some embodiments.
FIG. 4 shows a diagram of small periodic voltage spikes on the voltage bus and a dead band voltage range for responding to these voltage fluctuations according to some embodiments.
FIG. 5 shows a diagram of small periodic voltage sags on the voltage bus and a dead band voltage range for responding to these voltage fluctuations according to some embodiments.
FIG. 6 shows a diagram of electrical noise on the voltage bus having a frequency and a dead band voltage range for responding to these voltage fluctuations according to some embodiments.
FIG. 7 shows a diagram of a response of the ultracapacitor module to a voltage spike according to some embodiments.
FIG. 8 shows a diagram of a response of the ultracapacitor module to a voltage sag according to some embodiments.
FIG. 9 shows a diagram of a voltage range of an ultracapacitor cell stack and a programmable float voltage of an ultracapacitor module according to some embodiments.

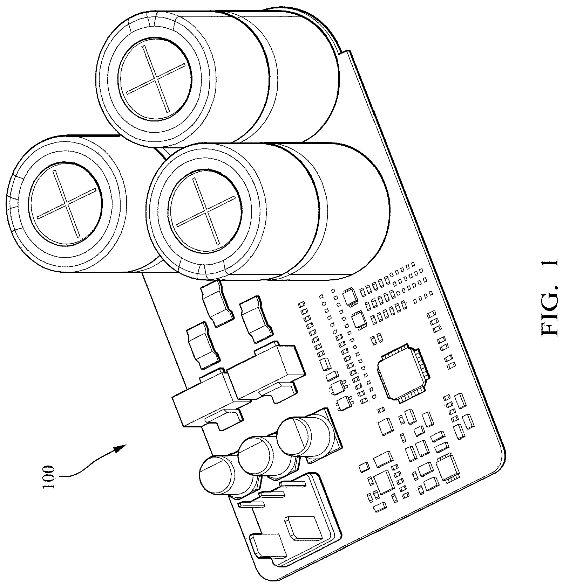

The present disclosure describes an ultracapacitor module shown in FIG. 1, hereafter referred to as the UCM 100. The UCM 100 addresses many of the deficiencies of the prior art described above. The UCM 100 in this example protects the voltage supply bus in a vehicle, e.g., an internal combustion engine vehicle, a hybrid electric vehicle, or an electric vehicle, from voltage sags or flyback voltage spikes caused by the switching of high current draw loads on and off on the voltage supply bus, e.g., electric antilock brakes, electric power steering, etc., thereby providing protection from voltage sags and flyback voltage spikes having a duration of 100 microseconds to 100 milliseconds to other electronic modules on the voltage supply bus. The UCM 100 may also or alternatively be configured provide emergency back-up power to satisfy safety critical systems, such as brake-by-wire or power door locks, for 1 to 2 seconds, in case of a loss of the primary electrical power supply in order to meet the necessary automotive safety integrity level (ASIL) of these systems, such as defined by the International Standards Organization (ISO) 26262-1:2001 Road Vehicle Functions Safety Standard.

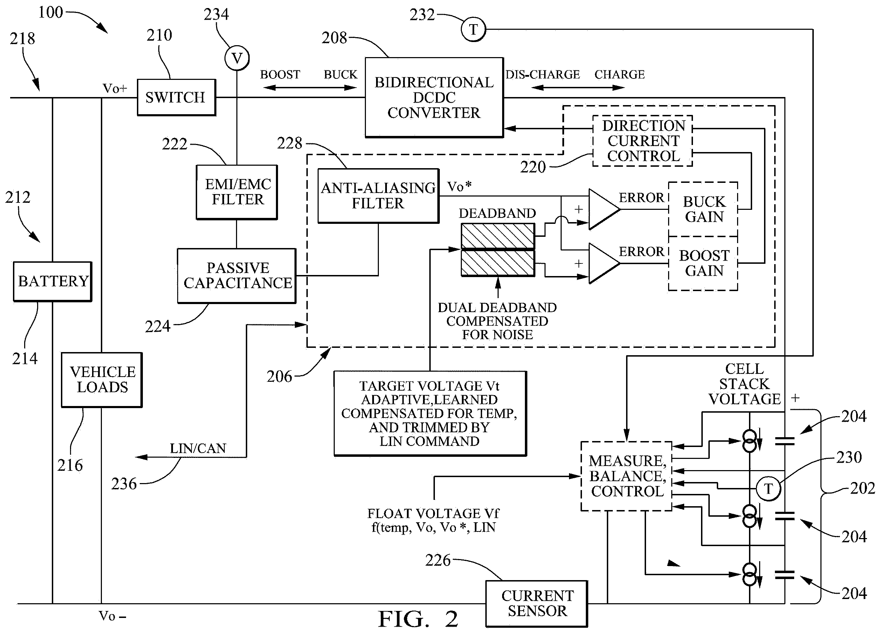

FIG. 2 is a block diagram of vehicle electrical system 212 utilizing ultracapacitor module 100 according to some embodiments. In some embodiments, vehicle electrical system 212 includes one or more power sources 214 (e.g., battery, alternator, etc.), one or more vehicle loads 216, a voltage supply bus 218, and the UCM 100. UCM 100 is connected to the voltage supply bus 218 and is configured to selectively provide power to the voltage supply bus 218 (boost mode) or receive power from the voltage supply bus 218 (buck mode). The voltage on the voltage supply bus 218 is designated as operating voltage Vo and may also be referred to as bus voltage.

As shown in FIG. 2, the UCM 100 includes an ultracapacitor cell stack 202 that has several ultracapacitor cells 204. As used herein, an ultracapacitor cell is a capacitive storage device having a capacitance of at least 100 farads. In this example three 325 farad, 2.7 volt ultracapacitor cells 204 are connected in series, thereby providing the ultracapacitor cell stack 202 with an equivalent capacitance of 108 farads and a working range of 5.0 to 8.4 volts. The configuration of the ultracapacitor cell stack 202 could be 3S1P (3 cells in series and 1 parallel string with 108F and 8.4V max) as in this example, or it could be 3S2P (3 cells in series and 2 parallel strings with 217F and 8.4V max), or in general xSyP. The ultracapacitor cell stack 202 is configured to operate at currents up to 200 amperes. The UCM 100 also includes an electronic controller 206 which controls the voltage of each ultracapacitor cell 204 and thereby controls the voltage of the ultracapacitor cell stack 202. The electronic controller 206 has one or more processors and memory. The processors may be microprocessors, application specific integrated circuits (ASIC), or built from discrete logic and timing circuits (not shown). Software instructions that program the processors may be stored in a non-volatile memory device (not shown). The memory device may be contained within the microprocessor or ASIC. Alternatively, the memory device may be a separate device. Non-limiting examples of the types of memory device that may be used include electrically erasable programmable read only memory (EEPROM), masked read only memory (ROM), and flash memory devices.

The UCM 100 further includes a bidirectional boost/buck DC/DC converter 208 that is capable of conducting at least the same current as the ultracapacitor cell stack 202 as the current flows in to or out of the ultracapacitor cell stack 202. Under the control of the electronic controller 206, the DC/DC converter 208 quickly switches between boost and buck modes. The time period for this transition is preferably in the order of 25 to 100 microseconds. Other electronic modules connected to the voltage supply bus 218 may also include capacitors that are appropriately sized to provide electrical power to these electronic modules during voltage transients on the voltage supply bus 218 while the DC/DC converter 208 is transitioning between boost and buck modes. The electronic controller 206 also controls the direction and the magnitude of electrical power flowing through the DC/DC converter 208. The electronic controller 206 additionally monitors the voltage of the voltage supply bus 218 and adaptively determines its nominal value, its rate of change, and, optionally, its frequency spectrum content. The UCM 100 may optionally include a switch 210 to protect against reverse polarity voltage.

In some embodiments, UCM 100 includes a plurality of ultracapacitor cells 204 connected in series with one another to form an ultracapacitor cell stack 202, a DC/DC converter 208, a switch 210 and an electronic controller 206. As shown in FIG. 2, DC/DC converter 208 is connected in series between the plurality of ultracapacitor cells 204 and the voltage supply bus 218. In general, UCM 100 operates by monitoring the operating voltage Vo on the voltage supply bus 218 and selectively operating DC/DC converter 208 to supply power to the voltage supply bus 218 when the operating voltage Vo falls below a threshold or target bus voltage value Vt (boost mode) and to receive power from the voltage supply bus 218 when the operating voltage Vo is above the threshold or target bus voltage value Vt (buck mode). To prevent the DC/DC converter 208 from oscillating between boost and buck modes, a dead band is set around the target bus voltage value Vt. The DC/DC converter 208 does not operate in boost mode until the operating voltage Vo is at or less than a lower dead band limit and the DC/DC converter 208 will continue to operate in boost mode until the operating voltage Vo is raised/boosted back to the target bus voltage value Vt (or within an acceptable tolerance of the target bus voltage value Vt). Similarly, the DC/DC converter 208 does not operate in buck mode until the operating voltage Vo is at or above an upper dead band limit and the DC/DC converter 208 will continue to operate in buck mode until the operating voltage Vo is lowered/bucked back to the target bus voltage value Vt (or within an acceptable tolerance of the target bus voltage value Vt). The dead band is typically selected to accommodate variations in the operating voltage Vo, which may be affected by wire and connector resistance, ambient temperature, vehicle-to-vehicle variances, component tolerances, system life stage, and electrical noise. In some embodiments, the UCM 100 accounts for variations in the operating voltage Vo that allows for utilization of a smaller dead band voltage range, as described in more detail below. In particular, in some embodiments the UCM 100 uses a table of voltage values (initial voltage value Vi) and corresponding temperatures. At vehicle start-up, a temperature is measured corresponding to an ambient temperature or a temperature of the UCM 100 is measured and the initial voltage value Vi for the corresponding temperature is selected from the table and is used to determine the target bus voltage value Vt. The voltage values in the table may be selectively updated over time in order to account for variances that are measured in the system. In this way, the UCM 100 is able to utilize learned voltage values to minimize the dead band voltage range that may otherwise be required. In some embodiments, the target bus voltage value Vt may also be adjusted during operation of the UCM 100 based on additional inputs received from the vehicle regarding actual or expected loads, events, etc.

As shown in FIG. 2, electronic controller 206 is configured to monitor the operation of DC/DC converter 208 and includes a direction and current control block 220 to provide commands for controlling the operation of DC/DC converter 208. Monitoring may include utilizing one or more sensors 234 to monitor the operating voltage Vo of the voltage supply bus 218. Monitoring may further include monitoring ultracapacitor cell stack temperature. Electronic controller 206 provides as a command the direction of power flow (buck/boost) and a target voltage/current for the DC/DC converter 208. As described in more detail below, the electronic controller 206 may further modify the target bus voltage Vt based on additional inputs received from the vehicle regarding actual or expected loads, events, etc. By controlling the target bus voltage Vt and controlling the direction of power (buck/boost), the dead band voltage range may be significantly narrowed. Electronic controller 206 is also configured to monitor and control the operation of the ultracapacitor cell stack 202, including monitoring the balance, state of health (SOH), state of charge (SOC), diagnostics, safety, temperature, etc. associated with the ultracapacitor cell stack 202.

As shown in FIG.2, UCM 100 may also include an electromagnetic interference/ electromagnetic compliance (EMI/EMC) filter 222 and passive capacitance 224 between the voltage supply bus 218 and the voltage sensing input of the electronic controller 206 which then passes through an anti-aliasing filter 228 within the electronic controller 206. The UCM 100 may also include one or more current sensors 226 to monitor the current flowing to/from the ultracapacitor cells 204, a first temperature sensor 230 to measure the temperature of the ultracapacitor cells 204, a second temperature sensor 232 to measure the temperature of the DC/DC converter 208, and one or more voltage sensors 234 configured to measure the operating voltage Vo of the voltage supply bus 218.

As further shown in FIG. 2, the electronic controller 206 may also include a digital anti-aliasing filter 228 to filter the operating voltage Vo input from the voltage supply bus 218, thereby providing a filtered operating voltage Vo*. The filtered operating voltage Vo* is filtered to remove noise, such as that produced by the switching of the DC/DC converter 208 or other electrical devices connected to the voltage supply bus 218. The electronic controller 206 is also configured to compare the operating voltage Vo to the upper and lower dead band limits and determine a buck gain if the operating voltage Vo is at or greater than the upper dead band limit and determine a boost gain if the operating voltage Vo is at or below the lower dead band limit. The buck/boost gain is sent to a direction and current control block 220 in the controller 206 to provide the commands for controlling the DC/DC converter 208. A first set of control parameters includes the buck gain. A second set of control parameters includes the boost gain.

As shown in FIG. 2, the buck/boost DC/DC converter 208 is connected in series between the ultracapacitor cell stack 202 in the ultracapacitor module 100 and the voltage supply bus 218 and is operated under the direction of the electronic controller 206. The electronic controller 206 provides the DC/DC converter 208 with the ability to map the ultracapacitor cell stack 202 voltage to the operating voltage Vo. Actively controlling a programmable float voltage Vf is the means of mapping the ultracapacitor cell stack 202 voltage to the operating voltage Vo.

The operating voltage Vo has a relatively large variance range due to temperature, operational tolerances of other components, vehicle-to-vehicle variance, ultracapacitor module life stage, and electrical noise on the voltage supply bus 218. Dual dead bands shown in the electronic controller 206 in FIG. 2 are established to avoid oscillation of the DC/DC converter 208 between boost and buck modes due to small variations of the operating voltage Vo. The dual dead bands between boost and buck modes are as large as, or larger than, the variances and tolerances described above to avoid undesirable switching between boost and buck modes. With large dead bands, the electronic controller 206 cannot minimize a disturbance on the voltage supply bus 218 because control of the voltage supply bus 218 does not begin until the operating voltage Vo is outside the limits of the dead bands. The electronic controller 206 may independently control an upper dead band with an upper dead band limit greater than the target bus voltage value Vt and a lower dead band with a lower dead band limit below the target bus voltage value Vt. The DC/DC converter 208 does not operate in boost mode until the operating voltage Vo is at or below the lower dead band limit and the DC/DC converter 208 will continue to operate in boost mode until the operating voltage Vo is raised/boosted back to the target bus voltage value Vt (or within an acceptable tolerance of the target bus voltage value Vt). Similarly, the DC/DC converter 208 does not operate in buck mode until the operating voltage Vo is at or greater than the upper dead band limit and the DC/DC converter 208 will continue to operate in buck mode until the operating voltage Vo is lowered/bucked back to the target bus voltage value Vt (or within an acceptable tolerance of the target bus voltage value Vt).

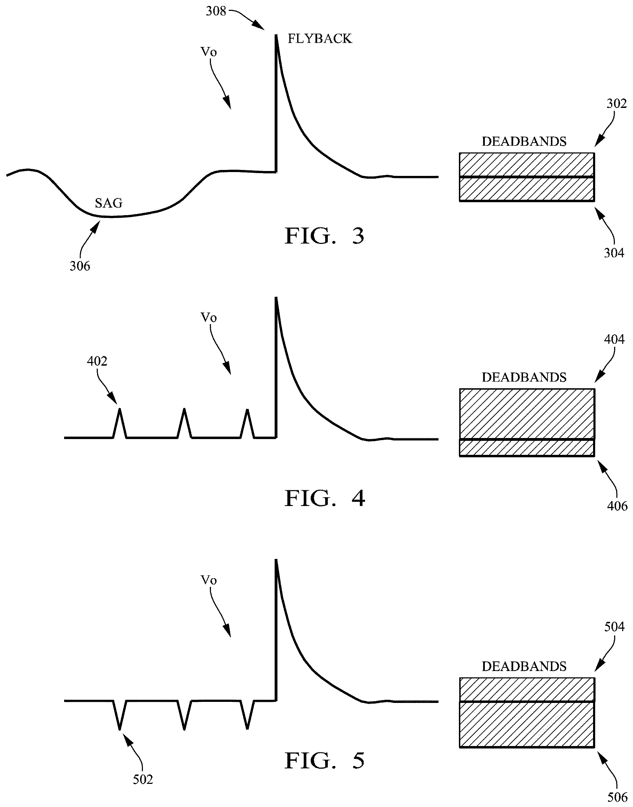

The UCM 100 mitigates several types of voltage fluctuations or transients on the voltage supply bus 218 as shown in FIGs. 3. Voltage sags may be caused by turning on high power loads connected to the voltage supply bus 218. Voltage spikes may be caused by turning off high power loads connected to the voltage supply bus 218, most significantly primarily inductive loads. The voltage sags are relatively low power but have longer duration and higher energy while the voltage spikes are of much shorter duration, lower energy, and higher power than the voltage sags. The UCM 100 has different control mechanisms for each type of voltage fluctuation.

To control the two different voltage disturbances on the voltage supply bus 218, the electronic controller 206 has two individual control loops with different gain characteristics for voltage sags and voltage spikes. Each control loop has a dead band so that the DC/DC converter 208 avoids transitioning from boost mode to buck mode during the same transient.

An upper or positive dead band 302, shown in FIGs. 3, prevents undesired transitions to buck mode and a lower or negative dead band 304, shown in FIG. 3, prevents undesired transitions to boost mode. In FIG. 3, the upper and lower dead bands are centered around the target bus voltage value Vt which is determined by the electronic controller 206. In particular the lower dead band 304 shown in FIG. 3 applies to the case of a voltage sag 306. When the operating voltage Vo of the voltage supply bus 218 is at or below a lower dead band limit of the lower dead band 304, the DC/DC converter 208 will boost the operating voltage Vo with current drawn from the ultracapacitor cell stack 202. The upper dead band 302 that is shown in FIGs. 3 applies to a voltage spike 308, e.g., caused by a current flyback from an inductive load on the voltage supply bus 218. When the operating voltage Vo of the voltage supply bus 218 is at or greater than an upper dead band limit of the upper dead band 302, the DC/DC converter 208 will buck current from the voltage supply bus 218 to the ultracapacitor cell stack 202, thereby decreasing the operating voltage Vo.

FIG. 4 shows an example where small periodic voltage spikes 402 are present on the voltage supply bus 218. To address this issue, the upper dead band limit of the upper dead band 404 may be raised so that the upper dead band 404 is wider than the lower dead band 406.

FIG. 5 shows an example where small periodic voltage sags 502 are present on the voltage supply bus 218. To address this issue, the lower dead band limit of the lower dead band 506 may be lowered so that the lower dead band 506 is wider than the upper dead band 504.

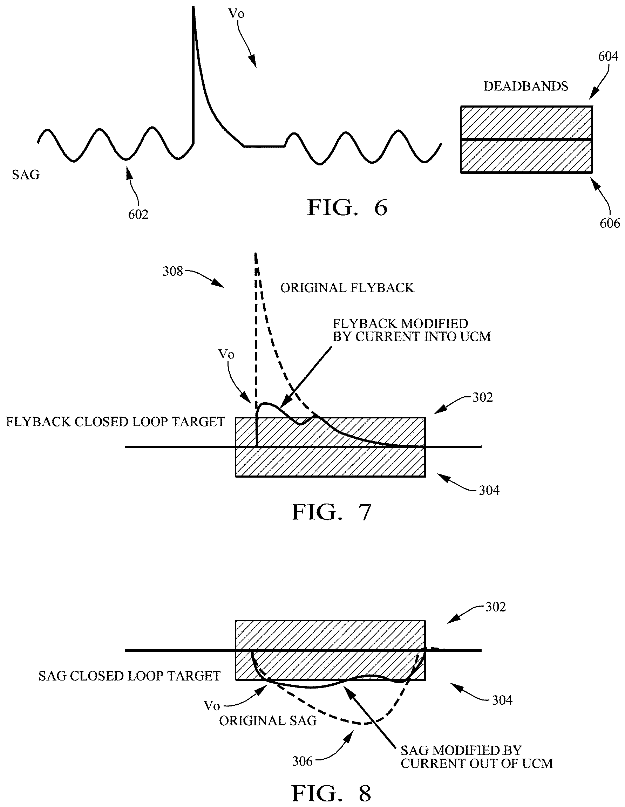

FIG. 6 shows an example where a sinusoidal noise 602, e.g., produced by an alternator, is present on the voltage supply bus 218. To address this issue, the upper dead band limit of the upper dead band 604 may be raised and the lower dead band limit of the lower dead band 606 may be lowered so that respective upper and lower dead band limits of the respective upper and lower dead bands 604, 606 exceed the limits of the sinusoidal noise.

FIG. 7 shows the reduction of the voltage spike 308 by bucking current from the voltage supply bus 218 to the ultracapacitor cell stack 202 of the UCM 100 and FIG. 8 shows the shows the reduction of the voltage sag 306 by boosting the operating voltage Vo with current drawn from the ultracapacitor cell stack 202 of the UCM 100.

To control different types of voltage disturbances (e.g., sags, spikes) on the voltage supply bus 218, the electronic controller 206 has two individual control loops with different gain characteristics. Each control loop has a dead band so that the DC/DC converter 208 avoids transitioning from boost mode to buck mode during the same transient. An upper dead band 302, shown in FIG. 3, prevents undesired transitions to buck mode and a lower dead band 304, shown in FIG. 3, prevents undesired transitions to boost mode. Each of the upper and lower dead bands may have different widths and are disposed on opposite sides of the target bus voltage value Vt, which is controlled by the electronic controller 206. In particular the lower dead band 304 shown in FIG. 3 is disposed below the target bus voltage value Vt and addresses the case of a voltage sag. When the operating voltage Vo of the voltage supply bus 218 is less than a lower dead band limit of the lower dead band 304, the DC/DC converter 208 will boost the operating voltage Vo with current drawn from the ultracapacitor cell stack 202. The upper dead band 302 that is shown in FIG. 3 is disposed above the target bus voltage value Vt and addresses the case of a voltage spike. When the operating voltage Vo of the voltage supply bus 218 exceeds an upper dead band limit of the upper dead band 302, the DC/DC converter 208 will buck current from the voltage supply bus 218 to the ultracapacitor cell stack 202.

Additionally, the electronic controller 206 may measure the direction and frequency content of disturbances on the voltage supply bus 218 and use this information to modify the dead bands. Some examples of this feature are shown in FIGs. 4-6. The dual control loops are shown in FIG. 2. The separate control loops allow for different gains for positive and negative voltage transients. For example, when using proportional-integral-derivative (PID) controllers, the proportional gain, integral gain, and/or derivative gain of the first control loop which controls the DC/DC converter 208 when the operating voltage Vo of the voltage supply bus 218 is greater than the target bus voltage value Vt, i.e., during a voltage spike, may be different than the proportional gain, integral gain, and/or derivative gain of the second control loop which controls the DC/DC converter 208 when the operating voltage Vo of the voltage supply bus 218 is less than the target bus voltage value Vt, i.e., during a voltage sag. Because the UCM 100 has different control loop gains for two different ranges of bus transients, the UCM 100 provides independent compensation for both voltage spikes and voltage sags in the operating voltage Vo of the voltage supply bus 218.

In some embodiments, the target bus voltage value Vt, the upper dead band limit and the lower dead band limit may be set by an external module over a LIN/CAN communication bus so that the UCM 100 operates in a primary/secondary relationship with a vehicle DC/DC converter (not shown). In other embodiments, the target bus voltage value Vt, the upper dead band limit and the lower dead band limit may be set to the same value by an external module over a LIN/CAN communication bus to provide filtering of a sinusoidal noise voltage on the voltage supply bus 218, e.g., caused by an alternator.

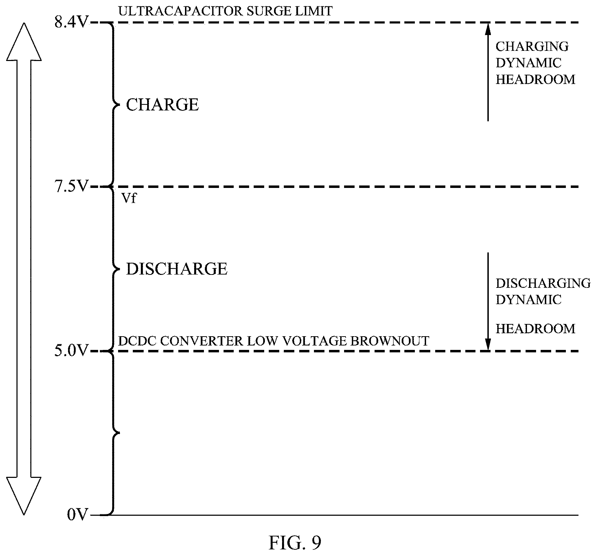

FIG. 9 shows the operating voltage range of the ultracapacitor cell stack 202 between an upper voltage limit (designated as "ULTRACAPACITOR SURGE LIMIT" in FIG. 9) and a lower voltage limit (designated as "DCDC CONVERTER LOW VOLTAGE BROWNOUT" in FIG. 9). The upper voltage limit is set to protect the ultracapacitor cell stack 202 from absorbing excess voltage from the voltage supply bus 218 that would damage the ultracapacitor cell stack 202. The lower voltage limit is set at a level below which the ultracapacitor cell stack 202 is not able to supply enough power to the DC/DC converter 208 to raise the voltage on the voltage supply bus 218. The programmable float voltage value Vf is set between the upper and lower voltage limits and can be controlled by the electronic controller 206. The float voltage value Vf can be shifted down to increase charging headroom between the float voltage value Vf and the upper voltage limit, which decreases the discharging headroom between the float voltage value Vf and the lower voltage limit. Alternatively, the float voltage value Vf can be shifted up to increase discharging headroom between the float voltage value Vf and the lower voltage limit, which decreases the charging headroom between the float voltage value Vf and the upper voltage limit. The ultracapacitor cell stack 202 is charged to absorb excess voltage on the voltage supply bus 218 and the ultracapacitor cell stack 202 is discharged to provide electrical power to raise the voltage on the voltage supply bus 218. The invention is defined by the appended claims.

In some examples, the techniques described herein relate to a computer readable medium, wherein execution of the program instructions by one or more processors of a computer system further causes the electronic controller to control the DC/DC converter using the first set of control parameters when the operating voltage Vo is at or greater than an upper dead band limit of an upper dead band voltage range, and control the DC/DC converter using the second set of control parameters when the operating voltage Vo is at or below a lower dead band limit of a lower dead band voltage range.

## Claims

1. An ultracapacitor module (100), comprising:
an ultracapacitor cell stack (202) containing one or more ultracapacitor cells;
a bidirectional boost/buck DC/DC converter (208), wherein the ultracapacitor cell stack (202) and the DC/DC converter (208) are configured to be connected in series with a voltage supply bus (218) of a vehicle;
one or more voltage sensors (234) configured to determine an operating voltage Vo of the voltage supply bus (218); and
an electronic controller (206) in electrical communication with the DC/DC converter (208) and the one or more voltage sensors (234),
**characterised in that**
the electronic controller (206) is configured to:
control the DC/DC converter (208) using a first set of control parameters when the operating voltage Vo is greater than a target bus voltage value Vt, and
control the DC/DC converter (208) using a second set of control parameters different from the first set of control parameters when the operating voltage Vo is less than the target bus voltage value Vt.

2. The ultracapacitor module (100) in accordance with claim 1, wherein electronic controller (206) is further configured to control the DC/DC converter (208) using the first set of control parameters when the operating voltage Vo is at or greater than an upper dead band limit of an upper dead band (302, 404, 504, 604) voltage range, and control the DC/DC converter (208) using the second set of control parameters when the operating voltage Vo is at or less than a lower dead band limit of a lower dead band (304, 406, 506, 606) voltage range.

3. The ultracapacitor module (100) in accordance with claim 1 or 2, wherein the electronic controller (206) is further configured to disable the DC/DC converter (208) when the operating voltage Vo is within an upper dead band (302, 404, 504, 604) voltage range greater than the target bus voltage value Vt.

4. The ultracapacitor module (100) in accordance with claim 3, wherein the electronic controller (206) is further configured to disable the DC/DC converter (208) when the operating voltage Vo is within a lower dead band (304, 406, 506, 606) voltage range less than the target bus voltage value Vt.

5. The ultracapacitor module (100) in accordance with claim 2, wherein a magnitude of the upper dead band (404, 504) voltage range is different than a magnitude of the lower dead band (406, 506) voltage range.

6. The ultracapacitor module (100) in accordance with claim 2 or 5, wherein the lower dead band (304, 406, 506, 606) voltage range is determined by the electronic controller (206) based on transitions of the operating voltage Vo relative to the target bus voltage value Vt.

7. The ultracapacitor module (100) in accordance with claim 6, wherein the lower dead band (304, 406, 506, 606) voltage range is further determined by the electronic controller (206) based on frequency content of the transitions of the operating voltage Vo relative to the target bus voltage value Vt.

8. The ultracapacitor module (100) in accordance with claim 2, wherein the upper dead band (302, 404, 504, 604) voltage range is determined by the electronic controller (206) based on transitions of the operating voltage Vo relative to the target bus voltage value Vt.

9. The ultracapacitor module (100) in accordance with claim 8, wherein the upper dead band (302, 404, 504, 604) voltage range is further determined by the electronic controller (206) based on frequency content of the transitions of the operating voltage Vo relative to the target bus voltage value Vt.

10. A method of operating an ultracapacitor module (100) connected to a voltage bus of a vehicle, the ultracapacitor module (100) having an ultracapacitor cell stack (202) containing one or more ultracapacitor cells, a bidirectional boost/buck DC/DC converter (208), wherein the ultracapacitor cell stack (202) and the DC/DC converter (208) are connected in series with the voltage bus, one or more voltage sensors (234) configured to determine an operating voltage Vo of the voltage bus, and an electronic controller (206) in electrical communication with the DC/DC converter (208) and the one or more voltage sensors (234), the method comprising:
controlling the DC/DC converter (208) using a first set of control parameters when the operating voltage Vo is greater than a target bus voltage value Vt; and
controlling the DC/DC converter (208) using a second set of control parameters different from the first set of control parameters when the operating voltage Vo is less than the target bus voltage value Vt.

11. The method in accordance with claim 10, wherein the method further comprises controlling the DC/DC converter (208) using the first set of control parameters when the operating voltage Vo is at or greater than an upper dead band limit of an upper dead band (302, 404, 504, 604) voltage range, and controlling the DC/DC converter (208) using the second set of control parameters when the operating voltage Vo is at or less than a lower dead band limit of a lower dead band (304, 406, 506, 606) voltage range.

12. The method in accordance with claim 10 or 11, wherein the method further comprises disabling the DC/DC converter (208) when the operating voltage Vo is within an upper dead band (302, 404, 504, 604) voltage range greater than the target bus voltage value Vt.

13. The method in accordance with claim 12, wherein the method further comprises disabling the DC/DC converter (208) when the operating voltage Vo is within a lower dead band (304, 406, 506, 606) voltage range less than the target bus voltage value Vt.

14. The method in accordance with claim 13, wherein a magnitude of the upper dead band (404, 504) voltage range is different than a magnitude of the lower dead band (406, 506) voltage range.

15. The method in accordance with claim 13 or 14, wherein the upper dead band (302, 404, 504, 604) voltage range is determined by the electronic controller (206) based on transitions of the operating voltage Vo relative to the target bus voltage value Vt.

## Patentansprüche

1. Ultrakondensatormodul (100), umfassend:
einen Ultrakondensatorzellenstapel (202), der eine oder mehrere Ultrakondensatorzellen enthält;
einen bidirektionalen Aufwärts-/Abwärts-DC/DC-Wandler (208), wobei der Ultrakondensatorzellenstapel (202) und der DC/DC-Wandler (208) konfiguriert sind, um mit einem Spannungsversorgungsbus (218) eines Fahrzeugs in Reihe geschaltet zu werden;
einen oder mehrere Spannungssensoren (234), die konfiguriert sind, um eine Betriebsspannung Vo des Spannungsversorgungsbusses (218) zu bestimmen; und
eine elektronische Steuerung (206) in elektrischer Kommunikation mit dem DC/DC-Wandler (208) und dem einen oder den mehreren Spannungssensoren (234), **dadurch gekennzeichnet, dass** die elektronische Steuerung (206) konfiguriert ist zum:
Steuern des DC/DC-Wandlers (208) unter Verwendung eines ersten Satzes von Steuerparametern, wenn die Betriebsspannung Vo größer als ein Zielbusspannungswert Vt ist, und
Steuern des DC/DC-Wandlers (208) unter Verwendung eines zweiten Satzes von Steuerparametern, der sich von dem ersten Satz von Steuerparametern unterscheidet, wenn die Betriebsspannung Vo kleiner als der Zielbusspannungswert Vt ist.

2. Ultrakondensatormodul (100) nach Anspruch 1, wobei die elektronische Steuerung (206) ferner konfiguriert ist, um den DC/DC-Wandler (208) unter Verwendung des ersten Satzes von Steuerparametern zu steuern, wenn die Betriebsspannung Vo bei oder größer als eine obere Totbandgrenze eines oberen Totbandspannungsbereichs (302, 404, 504, 604) ist, und den DC/DC-Wandler (208) unter Verwendung des zweiten Satzes von Steuerparametern zu steuern, wenn die Betriebsspannung Vo bei oder kleiner als eine untere Totbandgrenze eines unteren Totbandspannungsbereichs (304, 406, 506, 606) ist.

3. Ultrakondensatormodul (100) nach Anspruch 1 oder 2, wobei die elektronische Steuerung (206) ferner konfiguriert ist, um den DC/DC-Wandler (208) zu deaktivieren, wenn die Betriebsspannung Vo innerhalb eines oberen Totbandspannungsbereichs (302, 404, 504, 604) ist, der größer als der Zielbusspannungswert Vt ist.

4. Ultrakondensatormodul (100) nach Anspruch 3, wobei die elektronische Steuerung (206) ferner konfiguriert ist, um den DC/DC-Wandler (208) zu deaktivieren, wenn die Betriebsspannung Vo innerhalb eines unteren Totbandspannungsbereichs (304, 406, 506, 606) ist, der kleiner als der Zielbusspannungswert Vt ist.

5. Ultrakondensatormodul (100) nach Anspruch 2, wobei sich eine Größe des oberen Totbandspannungsbereichs (404, 504) von einer Größe des unteren Totbandspannungsbereichs (406, 506) unterscheidet.

6. Ultrakondensatormodul (100) nach Anspruch 2 oder 5, wobei der untere Totbandspannungsbereich (304, 406, 506, 606) durch die elektronische Steuerung (206) basierend auf Übergängen der Betriebsspannung Vo relativ zu dem Zielbusspannungswert Vt bestimmt wird.

7. Ultrakondensatormodul (100) nach Anspruch 6, wobei der untere Totbandspannungsbereich (304, 406, 506, 606) ferner durch die elektronische Steuerung (206) basierend auf einem Frequenzinhalt der Übergänge der Betriebsspannung Vo relativ zu dem Zielbusspannungswert Vt bestimmt wird.

8. Ultrakondensatormodul (100) nach Anspruch 2, wobei der obere Totbandspannungsbereich (302, 404, 504, 604) durch die elektronische Steuerung (206) basierend auf Übergängen der Betriebsspannung Vo relativ zu dem Zielbusspannungswert Vt bestimmt wird.

9. Ultrakondensatormodul (100) nach Anspruch 8, wobei der obere Totbandspannungsbereich (302, 404, 504, 604) ferner durch die elektronische Steuerung (206) basierend auf einem Frequenzinhalt der Übergänge der Betriebsspannung Vo relativ zu dem Zielbusspannungswert Vt bestimmt wird.

10. Verfahren zum Betreiben eines Ultrakondensatormoduls (100), das mit einem Spannungsbus eines Fahrzeugs verbunden ist, wobei das Ultrakondensatormodul (100) einen Ultrakondensatorzellenstapel (202), der eine oder mehrere Ultrakondensatorzellen enthält, einen bidirektionalen Aufwärts-/Abwärts-DC/DC-Wandler (208), wobei der Ultrakondensatorzellenstapel (202) und der DC/DC-Wandler (208) mit dem Spannungsbus in Reihe geschaltet sind, einen oder mehrere Spannungssensoren (234), die konfiguriert sind, um eine Betriebsspannung Vo des Spannungsbusses zu bestimmen, und eine elektronische Steuerung (206) in elektrischer Kommunikation mit dem DC/DC-Wandler (208) und dem einen oder den mehreren Spannungssensoren (234) aufweist, wobei das Verfahren umfasst:
Steuern des DC/DC-Wandlers (208) unter Verwendung eines ersten Satzes von Steuerparametern, wenn die Betriebsspannung Vo größer als ein Zielbusspannungswert Vt ist; und
Steuern des DC/DC-Wandlers (208) unter Verwendung eines zweiten Satzes von Steuerparametern, der sich von dem ersten Satz von Steuerparametern unterscheidet, wenn die Betriebsspannung Vo kleiner als der Zielbusspannungswert Vt ist.

11. Verfahren nach Anspruch 10, wobei das Verfahren ferner das Steuern des DC/DC-Wandlers (208) unter Verwendung des ersten Satzes von Steuerparametern, wenn die Betriebsspannung Vo bei oder größer als eine obere Totbandgrenze eines oberen Totbandspannungsbereichs (302, 404, 504, 604) ist, und das Steuern des DC/DC-Wandlers (208) unter Verwendung des zweiten Satzes von Steuerparametern, wenn die Betriebsspannung Vo bei oder kleiner als eine untere Totbandgrenze eines unteren Totbandspannungsbereichs (304, 406, 506, 606) ist, umfasst.

12. Verfahren nach Anspruch 10 oder 11, wobei das Verfahren ferner das Deaktivieren des DC/DC-Wandlers (208), wenn die Betriebsspannung Vo innerhalb eines oberen Totbandspannungsbereichs (302, 404, 504, 604) größer als der Zielbusspannungswert Vt ist, umfasst.

13. Verfahren nach Anspruch 12, wobei das Verfahren ferner das Deaktivieren des DC/DC-Wandlers (208), wenn die Betriebsspannung Vo innerhalb eines unteren Totbandspannungsbereichs (304, 406, 506, 606) kleiner als der Zielbusspannungswert Vt ist, umfasst.

14. Verfahren nach Anspruch 13, wobei sich eine Größe des oberen Totbandspannungsbereichs (404, 504) von einer Größe des unteren Totbandspannungsbereichs (406, 506) unterscheidet.

15. Verfahren nach Anspruch 13 oder 14, wobei der obere Totbandspannungsbereich (302, 404, 504, 604) durch die elektronische Steuerung (206) basierend auf Übergängen der Betriebsspannung Vo relativ zu dem Zielbusspannungswert Vt bestimmt wird.

## Revendications

1. Un module d'ultracondensateur (100), comprenant :
un empilement de cellules d'ultracondensateur (202) contenant une ou plusieurs cellules d'ultracondensateur ;
un convertisseur continu/continu boost/buck bidirectionnel (208), l'empilement de cellules d'ultracondensateur (202) et le convertisseur continu/continu (208) étant configurés pour être montés en série avec un bus d'alimentation en tension d'un véhicule ;
un ou plusieurs capteurs de tension (234) configurés pour déterminer une tension de fonctionnement Vo du bus d'alimentation en tension (218) ; et
un contrôleur électronique (206) en communication électrique avec le convertisseur continu/continu (208) et avec les un ou plusieurs capteurs de tension (234),
**caractérisé en ce que**
le contrôleur électronique (206) est configuré pour :
contrôler le convertisseur continu/continu (208) en utilisant un premier ensemble de paramètres de contrôle lorsque la tension de fonctionnement Vo est supérieure à une valeur de tension de bus cible Vt, et
contrôler le convertisseur continu/continu (208) en utilisant un second ensemble de paramètres de contrôle différents du premier ensemble de paramètres de contrôle lorsque la tension de fonctionnement Vo est inférieure à la valeur de tension de bus cible Vt.

2. Le module d'ultracondensateur (100) selon la revendication 1, dans lequel le contrôleur électronique (206) est en outre configuré pour contrôler le convertisseur continu/continu (208) en utilisant le premier ensemble de paramètres de contrôle lorsque la tension de fonctionnement Vo est au niveau de, ou supérieure à, une limite de bande morte supérieure d'une plage de tensions de bande morte supérieure (302, 404, 504, 604), et contrôler le convertisseur continu/continu (208) en utilisant le second ensemble de paramètres de contrôle lorsque la tension de fonctionnement Vo est au niveau de, ou inférieure à, une limite de bande morte inférieure d'une plage de tensions de bande morte inférieure (304, 406, 506, 606).

3. Le module d'ultracondensateur (100) selon la revendication 1 ou 2, dans lequel le contrôleur électronique (206) est en outre configuré pour désactiver le contrôleur continu/continu (208) lorsque la tension de fonctionnement Vo est à l'intérieur d'une plage de tensions de bande morte supérieure (302, 404, 504, 604), supérieure à la valeur de tension de bus cible Vt.

4. Le module d'ultracondensateur (100) selon la revendication 3, dans lequel le contrôleur électronique (206) est en outre configuré pour désactiver le convertisseur continu/continu (208) lorsque la tension de fonctionnement Vo est à l'intérieur d'une plage de tensions de bande morte inférieure (304, 406, 506, 606), inférieure à la valeur de tension de bus cible Vt.

5. Le module d'ultracondensateur (100) selon la revendication 2, dans lequel un niveau de la plage de tensions de bande morte supérieure (404, 504) est différent d'un niveau de la plage de tensions de bande morte inférieure (406, 506).

6. Le module d'ultracondensateur (100) selon la revendication 2 ou 5, dans lequel la plage de tensions de bande morte inférieure (304, 406, 506, 606) est déterminée par le contrôleur électronique (206) sur la base de transitions de la tension de fonctionnement Vo par rapport à la valeur de tension du bus cible Vt.

7. Le module d'ultracondensateur (100) selon la revendication 6, dans lequel la plage de tensions de bande morte inférieure (304, 406, 506, 606) est en outre déterminée par le contrôleur électronique (206) sur la base d'un contenu de fréquence des transitions de la tension de fonctionnement Vo par rapport à la valeur de tension de bus cible Vt.

8. Le module d'ultracondensateur (100) selon la revendication 2, dans lequel la plage de tensions de bande morte supérieure (302, 404, 504, 604) est déterminée par le contrôleur électronique (206) sur la base de transitions de la tension de fonctionnement Vo par rapport à la valeur de tensions de bus cible Vt.

9. Le module d'ultracondensateur (100) selon la revendication 8, dans lequel la plage de tensions de bande morte supérieure (302, 404, 504, 604) est en outre déterminée par le contrôleur électronique (206) sur la base d'un contenu de fréquence des transitions de la tension de fonctionnement Vo par rapport à la valeur de tension de bus cible Vt.

10. Un procédé de mise en œuvre d'un module d'ultracondensateur (100) relié à un bus de tension d'un véhicule, le module d'ultracondensateur (100) possédant un empilement de cellules d'ultracondensateur (202) contenant une ou plusieurs cellules d'ultracondensateur, un convertisseur continu/continu boost/buck bidirectionnel (208), l'empilement de cellules d'ultracondensateur (202) et le convertisseur continu/continu (208) étant configurés pour être montés en série avec le bus de tension, un ou plusieurs capteurs de tension (234) configurés pour déterminer une tension de fonctionnement Vo du bus de tension (218), et un contrôleur électronique (206) en communication électrique avec le convertisseur continu/continu (208) et avec les un ou plusieurs capteurs de tension (234), le procédé comprenant :
le contrôle du convertisseur continu/continu (208) en utilisant un premier ensemble de paramètres de contrôle lorsque la tension de fonctionnement Vo est supérieure à une valeur de tension de bus cible Vt, et
le contrôle du convertisseur continu/continu (208) en utilisant un second ensemble de paramètres de contrôle différents du premier ensemble de paramètres de contrôle lorsque la tension de fonctionnement Vo est inférieure à la valeur de tension de bus cible Vt.

11. Le procédé selon la revendication 10, dans lequel le procédé comprend en outre le contrôle du convertisseur continu/continu (208) en utilisant le premier ensemble de paramètres de contrôle lorsque la tension de fonctionnement Vo est au niveau de, ou supérieure à, une limite de bande morte supérieure d'une plage de tensions de bande morte supérieure (302, 404, 504, 604), et le contrôle du convertisseur continu/continu (208) en utilisant le second ensemble de paramètres de contrôle lorsque la tension de fonctionnement Vo est au niveau de, ou inférieure à, une limite de bande morte inférieure d'une plage de tensions de bande morte inférieure (304, 406, 506, 606).

12. Le procédé selon la revendication 10 ou 11, dans lequel le procédé comprend en outre la désactivation du contrôleur continu/continu (208) lorsque la tension de fonctionnement Vo est à l'intérieur d'une plage de tensions de bande morte supérieure (302, 404, 504, 604), supérieure à la valeur de tension de bus cible Vt.

13. Le procédé selon la revendication 12, dans lequel le procédé comprend en outre la désactivation du convertisseur continu/continu (208) lorsque la tension de fonctionnement Vo est à l'intérieur d'une plage de tensions de bande morte inférieure (304, 406, 506, 606), inférieure à la valeur de tension de bus cible Vt.

14. Le procédé selon la revendication 13, dans lequel un niveau de la plage de tensions de bande morte supérieure (404, 504) est différent d'un niveau de la plage de tensions de bande morte inférieure (406, 506).

15. Le procédé selon la revendication 13 ou 14, dans lequel la plage de tensions de bande morte supérieure (302, 404, 504, 604) est déterminée par le contrôleur électronique (206) sur la base de transitions de la tension de fonctionnement Vo par rapport à la valeur de tensions de bus cible Vt.
